Europäisches Patentamt

European Patent Office

Office européen des brevets

Veröffentlichungsnummer: **0 287 685**
**A1**

# EUROPÄISCHE PATENTANMELDUNG

Anmeldenummer: 87103630.7

Int. Cl.⁴: **F04C 18/12**

Anmeldetag: 13.03.87

Veröffentlichungstag der Anmeldung:
26.10.88 Patentblatt 88/43

Benannte Vertragsstaaten:
**CH DE FR GB LI**

Anmelder: **LEYBOLD AKTIENGESELLSCHAFT**
**Bonner Strasse 498**
**D-5000 Köln 51(DE)**

Erfinder: **Steffens, Ralf**
**Homburger Strasse 22/11**
**D-5000 Köln 51(DE)**

Vertreter: **Leineweber, Jürgen, Dipl.-Phys.**
**Nagelschmiedshütte 8**
**D-5000 Köln 40(DE)**

Zweiwellenvakuumpumpe mit einem Synchronisationsgetriebe.

Die Erfindung bezieht sich auf eine Zweiwellenvakuumpumpe mit berührungsfrei im Schöpfraum (8) rotierenden Kolben (3, 4) mit einem in einem Seitenraum (15) befindlichen Synchronisationsgetriebe mit zwei Zahnrädern (16, 17); um auf eine Ölversorgung im Getriebeseitenraum verzichten zu können, wird vorgeschlagen, daß das Zahnprofil der Zahnräder (16, 17) derart ausgebildet ist, daß der Kontakt der Zahnflanken (26) auf die unmittelbare Nähe des Wälzkreises (29) beschränkt ist.

FIG. 4

EP 0 287 685 A1

## Zweiwellenvakuumpumpe mit einem Synchronisationsgetriebe

Die Erfindung bezieht sich auf eine Zweiwellenvakuumpumpe mit berührungsfrei im Schöpfraum rotierenden Kolben und mit einem in einem Seitenraum befindlichen Synchronisationsgetriebe mit zwei Zahnrädern.

Ein typischer Vertreter einer Zweiwellenvakuumpumpe ist die Wälzkolbenpumpe, bei der sich im Pumpengehäuse zwei symmetrisch gestaltete Kolben zueinander und zum Gehäuse hin berührungsfrei drehen. Die beiden Kolben haben ungefähr einen 8-förmigen Querschnitt. Ihre Bewegung wird durch ein Getriebe synchronisiert, das üblicherweise aus zwei Zahnrädern besteht. Das Getriebe ist in einem Seitenraum untergebracht, der durch ein Lagerschild vom Schöpfraum der Wälzkolbenpumpe getrennt ist. Die Wellen durchsetzen das Lagerschild und stützen sich darin in der Regel über Wälzlager ab. Auf den in den Seitenraum hineinragenden Wellenstümpfen sind die Zahnräder befestigt. Die Schmierung der Zahnräder und der Lager erfolgt üblicherweise mittels Öls, das sich in den Seitenräumen befindet und mittels einer Schleuderscheibe verwirbelt wird. Zu den Zweiwellenmaschinen gehören weiterhin Northey-Pumpen, Schraubenkompressoren usw., welche auch als Vakuumpumpen eingesetzt werden.

Zweiwellenvakuumpumpen der betroffenen Art haben den Vorteil, daß im Schöpfraum keinerlei Reibung auftritt, so daß die Arbeitsräume frei von Schmiermitteln gehalten werden können. Sie sind deshalb besonders geeignet für den Einsatz bei Fördermedien, die von kohlenstoffhaltigen Verunreinigungen freigehalten werden müssen. Eine wesentliche Voraussetzung dafür ist eine wirksame Abdichtung der Durchführungen der Wellen zu den seitlichen, Öl enthaltenden Getrieberäumen. Als Dichtung zwischen den Ölräumen und dem Schöpfraum werden üblicherweise Kolbenringabdichtungen eingesetzt. Diese und auch andere bekannte Schöpfraumabdichtungen, z. B. Simmerringe oder Gleitringdichtungen, stellen sämtlich keine zufriedenstellende Lösung der Zweiwellenvakuumpumpe dar, nämlich der sicheren Abdichtung zwischen Schöpf-und Getrieberäumen, um den absolut trockenen (das heißt ölfreien) Arbeitsraum der Pumpe ständig zu garantieren.

Aus der DE-OS 33 44 953 ist es bekannt, die Seitenräume einer Wälzkolbenvakuumpumpe zu evakuieren, um dadurch im Bereich der Wellenabdichtungen in Richtung der Seitenräume gerichtete Teilströme des Fördermediums aufrechtzuerhalten. Maßnahmen dieser Art sind aufwendig. Außerdem sind sie bei aggressiven oder toxischen Fördermedien nicht einsetzbar.

Der vorliegenden Erfindung liegt die Aufgabe zugrunde, das Synchronisationsgetriebe einer Zweiwellenvakuumpumpe der eingangs genannten Art so zu gestalten, daß eine Ölversorgung nicht mehr erforderlich ist.

Erfindungsgemäß wird diese Aufgabe dadurch gelöst, daß das Zahnprofil der Zahnräder des Synchronisationsgetriebes derart ausgebildet ist, daß der Kontakt der Zahnflanken auf die unmittelbare Nähe des Wälzkreises beschränkt ist. Bei einem in dieser Weise ausgebildeten Getriebe ist der Abstand zwischen dem Wälzpunkt und dem am weitesten entfernten Eingriffspunkt sehr klein. Die Bewegung zwischen zwei einander berührenden Zahnflanken, die sich aus Gleit-und Wälzanteilen zusammensetzt, ist auf diese Weise im wesentlichen nur auf den Wälzbereich beschränkt, das heißt, die auftretenden Gleitbewegungen sind minimal. Da im wesentlichen nur die Gleitbewegungen bei Zahnrädern einer Ölschmierung bedürfen, kann bei dem erfindungsgemäß gestalteten Getriebe auf die Verwendung eines Schmiermittels vollständig oder zumindest auf die Verwendung von Öl als Schmiermittel verzichtet werden. Die Gefahr, daß Öl oder Öldämpfe durch die Wellenabdichtungen im Lagerschild in den Schöpfraum dringen, ist damit nicht mehr vorhanden, nachdem auch die Kolbenlagerung ohne Ölschmierung ausgeführt ist; bekanntes Prinzip: fettgeschmierte Wälzlager.

Um das Ziel einer Beschränkung des Zahnflankenkontaktes auf die unmittelbare Nähe des Wälzkreises zu erreichen, können die verschiedensten Maßnahmen getroffen werden. Zum Beispiel kann an zumindest einem der Zahnräder der Kopf-und/oder der Fußbereich der Zahnflanken im Vergleich zur Standardform eines Zahnprofils ausreichend weit zurückgenommen sein. Weiterhin können - ebenfalls im Vergleich zur Standardform eines Zahnprofils - beide Zahnräder wesentlich reduzierte Zahnhöhen aufweisen. Bei einer besonders vorteilhaften Lösung übersteigt die wirksame Zahnhöhe (diejenige Zahnhöhe, die über ihre Flanke mit der Flanke des Gegenzahnes in Kontakt kommt) den Wälzkreis nur unwesentlich, zum Beispiel um 1/100 bis 2/5 des Moduls m der Verzahnung, die vorzugsweise im übrigen Standardform hat. Diese Maßnahmen können einzeln oder auch in Kombination durchgeführt werden.

Da die Größe des Kontaktbereichs der Zähne nicht beliebig reduziert werden kann und von der zu übertragenden Leistung abhängt, werden gegebenenfalls weitere Maßnahmen vorgeschlagen, bei denen ohne eine Ölschmierung eine Freßgefahr nicht ausgeschlossen ist. Maßnahmen dieser Art können eine Profilrücknahme der Zähne, vorzugsweise im Tragbereichsanfang, sein. Eine andere Möglichkeit besteht darin, relativ elastische Zahnradseitenbereiche vorzusehen. Durch Maßnahmen dieser Art ist die Freßgefahr im Eingriffsstoß reduziert, das heißt, daß das Auftreten insbesondere eines stemmenden Gleitens während des In-den-Eingriff-Kommens der Zähne minimiert ist.

Mit den bestehenden Maßnahmen ist weiterhin der Vorteil verbunden, daß infolge der weitestgehend reduzierten Gleitgeschwindigkeiten zu Temperaturerhöhungen führende Reibbewegungen nahezu vollständig vermieden sind. Dennoch kann es zweckmäßig sein, weitere Maßnahmen zur Reduzierung des Temperaturniveaus vorzusehen, zumal pumpenseitig üblicherweise Verlustleistungen auftreten, die die Temperatur der Verzahnung erhöhen. Eine zweckmäßige Lösung besteht darin, die Zahnräder in einem Gasstrom (inert und/oder gekühlt) anzuordnen. Dabei kann der Gasstrom aus dem Förderstrom der Pumpe abgezweigt sein oder separat, zum Beispiel mit einer Kühlung, geführt sein. Eine andere Möglichkeit besteht darin, zwischen den Zahnrädern und den Wärme abgebenden Gehäusewänden des Getrieberaumes enge Zwischenräume vorzusehen, damit die Wärmeabfuhr nicht durch große Abstände behindert ist. Diese Maßnahme hat weiterhin den Vorteil, daß dadurch das gesamte Totvolumen der Pumpe minimiert wird, das heißt, bei Pumpvorgängen wird das schädliche Nachströmen von Gas aus den Getrieberäumen reduziert. Schließlich ist auch das gesamte Bauvoumen der Pumpe kleiner.

Weitere Vorteile und Einzelheiten der Erfindung sollen anhand von in den Figuren 1 bis 9 dargestellten Ausführungsbeispielen erläutert werden. Es zeigen:

Fig. 1 einen Teil eines Längsschnittes durch beide Achsen einer Wälzkolbenvakuumpumpe,

Fig. 2 einen Querschnitt in Höhe der Zahnräder,

Figuren 3 bis 6 Gestaltungen der Verzahnung der Zahnräder,

Fig. 7 eine Möglichkeit der Eingrenzung eines Schmierfett enthaltenden Raumes,

Fig. 8 einen Längsschnitt durch ein weiteres Ausführungsbeispiel einer Wälzkolbenvakuumpumpe, senkrecht zu den Wellen geschnitten,

Fig. 9 einen der Fig. 8 entsprechenden Schnitt durch ein weiteres Ausführungsbeispiel.

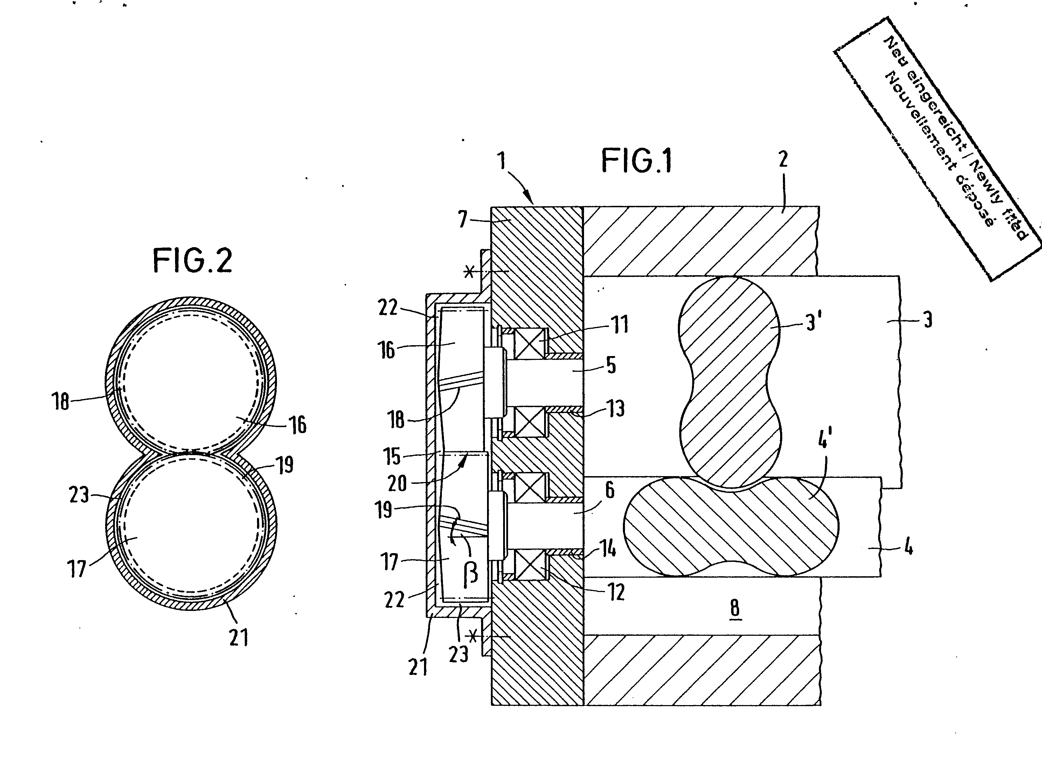

Bei der in Fig. 1 dargestellten Wälzkolbenpumpe 1 sind der Gehäusering mit 2 und die darin rotierenden Kolben mit 3 und 4 bezeichnet. Der Querschnitt der Kolben ist separat dargestellt und mit 3' und 4' bezeichnet. Die Wellen 5 und 6 der Kolben 3 und 4 sind in seitlichen Lagerschilden gelagert, von denen nur das räderseitige Lagerschild 7 dargestellt ist. Der Gehäusering 2 und die Lagerschilde bilden den Schöpfraum 8 der dargestellten Vakuumpumpe 1.

Die Wellen 5 und 6 stützen sich über die Lager 11 und 12 im Lagerschild 7 ab. Zwischen den Lagern 11 und 12 sowie dem Schöpfraum 8 befinden sich schematisch dargestellte Wellendichtungen 13 und 14, die den Schöpfraum 8 vom Seitenraum 15 trennen.

Der Seitenraum 15 dient der Aufnahme des Synchronisationsgetriebes, das aus den Zahnrädern 16 und 17 besteht. Die Zahnräder 16 und 17 sind auf den Stümpfen der Wellen 5 und 6 befestigt. Die Zahnzahl der Verzahnungen 18 und 19, die bei 20 ineinandergreifen, ist identisch. Der Seitenraum 15 wird begrenzt durch das Lagerschild 7 und den auf das Lagerschild 7 befestigten Seitenraumdeckel 21.

Wie im einzelnen weiter unten näher dargelegt, ist die Verzahnung 18, 19 der Zahnräder 16, 17 so gestaltet, daß eine Ölversorgung im Seitenraum 15 nicht mehr erforderlich ist. Bei einer besonders günstigen Gestaltung der Verzahnung mit vernachlässigbarer Gleitreibung ist der vollständige Trockenlauf des Getriebes möglich. Bei einer geringfügig noch vorhandenen Gleitreibung reicht bereits ein relativ geringer Fettvorrat (für Vakuumzwecke geeignetes Wälzlagerfett) im Seitenraum 15 zur Schmierung des Eingriffs 20 und der Lager 11, 12 aus.

Es besteht deshalb die Möglichkeit (siehe auch Fig. 2), den Seitenraum wesentlich kleiner zu gestalten, als es bei einem ölversorgten Seitenraum erforderlich ist. Der Deckel 21 ist in seiner Form etwa 8-förmig gestaltet und den Zahnrädern 16, 17 derart angepaßt, daß nur enge Spalte 22 (axial) und 23 (radial) zwischen den Zahnrädern 16, 17 und dem Gehäusedeckel 21 vorhanden sind. In diesen Räumen befindet sich das gegebenenfalls noch erforderliche Fett.

Die Stirnseiten der Zahnräder 16 und 17 sind beim Ausführungsbeispiel nach Fig. 1 derart konisch gestaltet, daß die Breite der Zahnräder in radialer Richtung abnimmt. Dadurch ergibt sich ebenfalls eine konische Gestaltung der axialen Spalte 22. Das beim Eingriff 20 von der Verzahnung weggedrückte Fett wird über die sich verengende Seitenspalte 22 wieder an die Zahnradseitenflächen herangeführt und von dort wegen Fliehkräfte zurück in Verzahnungsrichtung bewegt.

Das Fett erfüllt damit zwei Aufgaben: Zum einen dient es der Schmierung des Zahneingriffs 20. Zum anderen dient das von der Verzahnung seitlich in Richtung Seitenraumdeckel 21 weggedrückte Fett dem Transport von Wärme von den Zahnrädern auf den Seitenraumdeckel 21. Falls erforderlich, kann die Wärmeabgabe des Deckels 21 nach außen durch Umspülung mit Luft, gekühltem Öl oder direkt mit Wasser verbessert werden.

Als Verzahnung 18, 19 ist eine Schrägverzahnung gewählt mit einem Schrägungswinkel $\beta$, der

zweckmäßigerweise 10° bis 35°, vorzugsweise etwa 20°, beträgt. Die Schrägverzahnung beziehungsweise die Drehrichtung ist so gewählt, daß das Fett infolge der Drehung der Zahnräder vom Schöpfraum weg bewegt wird.

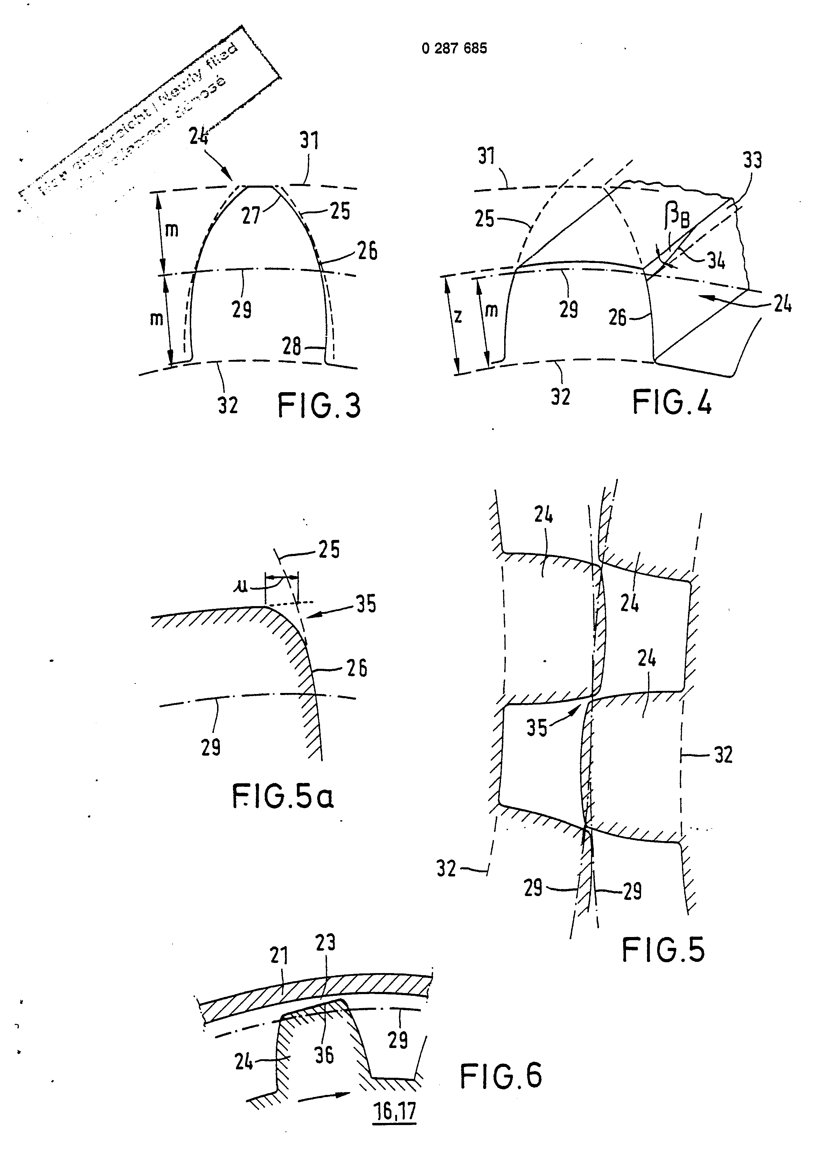

Die Figuren 3 bis 5 zeigen zweckmäßige Verzahnungen mit minimalen Gleitanteilen. Beim Ausführungsbeispiel nach Fig. 3 ist ein Zahn 24 dargestellt, dessen Profil gegenüber der Form einer Standardverzahnung - gestrichelt dargestellt und mit 25 bezeichnet - verändert ist. Seine Flanken 26 sind gegenüber der Standardform im Kopfbereich 27 und im Fußbereich 28 derart weit zurückgenommen, daß die miteinander in Eingriff kommenden Zähne in diesen Bereichen sich nicht mehr berühren. Die in Eingriff kommenden Zähne 24 haben lediglich im Bereich ihres Wälzkreises 29 Kontakt. Weit davon entfernt liegende Eingriffspunkte mit Gleitreibung sind nicht vorhanden. Die Gleitreibung ist dadurch minimiert. In die Fig. 3 sind noch der Kopf-und der Grundkreis der Verzahnung eingezeichnet und mit 31 und 32 bezeichnet. Durch den Modul m ist die Verzahnung charakterisiert. Der Wälzkreis 29 ist bei der Standardverzahnung vom Kopfkreis 31 und vom Grundkreis um die Modulgröße m entfernt. Der Fußkreis und der genannte Grundkreis 32 unterscheiden sich um das sogenannte "Kopfspiel".

Bei den Ausführungsbeispielen nach den Figuren 4 und 5 haben die Zähne 24 ein Zahnprofil mit gegenüber der Standardform 25 stark reduzierter Zahnhöhe z. Die Zahnhöhe z ist nur unwesentlich größer als der standardmäßige Modul m, und zwar um 1/100 bis 2/5 des Modulwertes m. Dadurch ergibt sich ein sehr schmaler Tragbereich 33, in dem Gleitbewegungen vernachlässigbar sind. Da es sich um eine Schrägverzahnung handelt, verlaufen die Berührungslinien schräg durch den Tragbereich 33 (Berührungslinie 34). Der Winkel zwischen der Berührungsinie 34 und den den Tragbereich 33 begrenzenden Linien ist mit $\beta_B$ bezeichnet.

Fig. 5 zeigt eine in Eingriff stehende Verzahnung mit einem Zahnprofil nach Fig. 4. Bei einer Verzahnung dieser Art mit einer theoretischen Evolventenform würde es beim Eingreifen der Zähne jeweils zum sogenannten "Eingriffsstoß" kommen, der durch die Zahnflankenbewegung des "stemmenden" oder auch "schiebenden Gleitens" gekennzeichnet ist. Zur Milderung des Eingriffsstoßes ist bei der Verzahnung nach Fig. 5 eine Profilkorrektur vorgesehen. Diese besteht aus einer geringfügigen Profilrücknahme 35, vorzugsweise nur im Tragbereichsanfang, und ist in Fig. 5a noch einmal vergrößert dargestellt: Die Standardform des Zahnflankenprofilverlaufs ist wiederum mit 25 und der Wälzkreis mit 29 gekennzeichnet. Die Kopfrücknahme 35 wird nun üblicherweise derartig ausgeführt, daß der tatsächliche Zahnflankenverlauf 26 am Kopfkreis gegenüber der Standardform 25 um den Wert μ zurückgenommen wird und dann allmählich, das heißt im mathematischen Sinn ohne Unstetigkeitsstelle, gleicher Tangentenverlauf im Übergang, in die standardmäßige Evolventenform 25 wieder übergeht. Der Wert für μ liegt üblicherweise zwischen 2 und 10 μm, vorzugsweise etwa 4 μm.

Fig. 6 zeigt eine Verzahnung der in den Figuren 4 und 5 dargestellten Art mit einer geneigten Kopffläche 36. Die Neigung der Kopffläche 36 ist derart gewählt, daß die vorlaufende Kopfkante höher ist als die nachlaufende Kante. Infolge dieser Maßnahme ist die Reibung zwischen der Kopffläche 36 und dem sich im Spalt 23 befindlichen Fett verringert. Dennoch ist die Mitnahme des Fettes zum Zwecke der Schmierung und zum Zwecke des Wärmetransportes gewährleistet. Das von den vorderen Kopfkanten abgeschabte Fett wird zwischen den sich berührenden Flanken als Schmierstoff verwendet und in dabei verbleibende Freiräume gedrückt. Vorzugsweise sind dieses die Zahnfußzwischenbereiche. Nach dem Zahneingriff wird das Fett infolge der Fliehkräfte wieder an den außeniegenden, kühleren Fettring abgegeben und hat damit nach der Schmierung noch Wärme vom Zahnkopf auf die gekühlte Gehäusefläche 21 abgegeben.

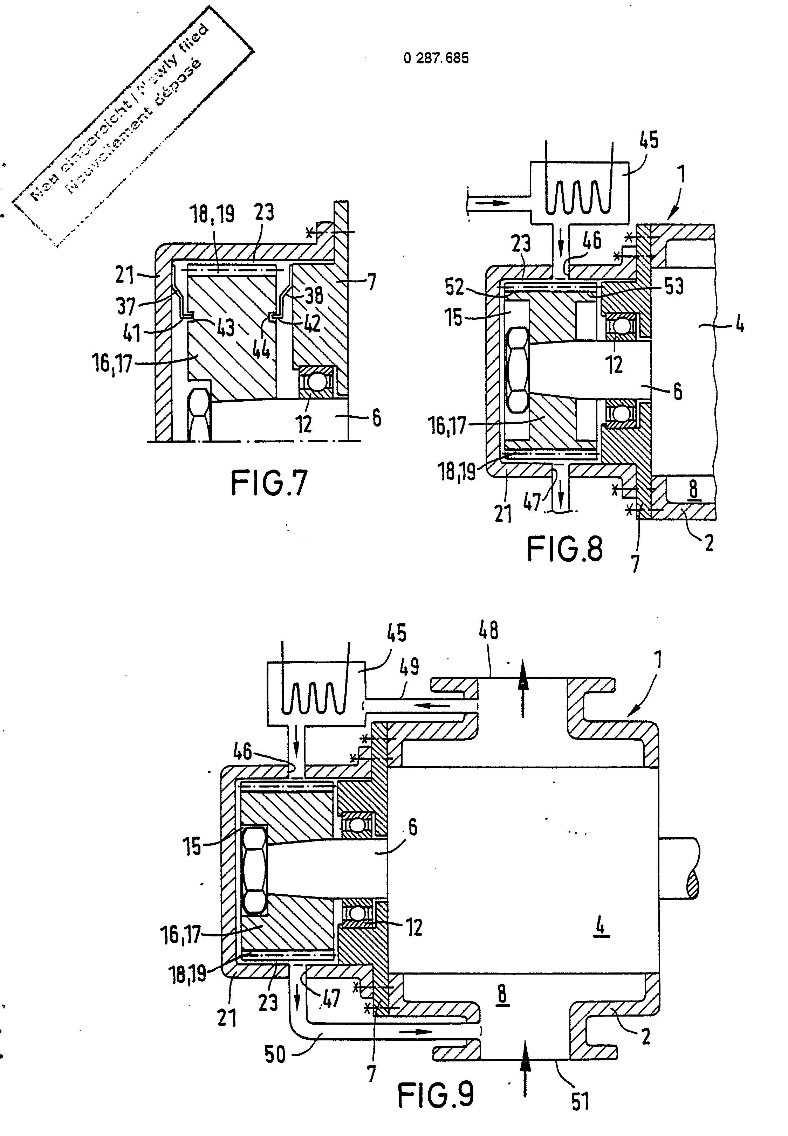

Beim Ausführungsbeispiel nach Fig. 7 sind Maßnahmen getroffen, die den Raum, in dem sich das Fett befindet (vorzugsweise im radialen Spalt 23),abgrenzen. Dazu sind auf beiden Seiten des Zahnrades 16 oder 17 Profilringe 37, 38 vorgesehen, die mit ihrem einen Rand am Seitenraumdeckel 21 beziehungsweise am Lagerschild 7 befestigt sind. Die freien Ränder 41, 42 sind jeweils in Richtung Zahnrad 16, 17 abgewinkelt und ragen in kreisringförmige Nuten 43, 44 am Zahnrad 16, 17 hinein. Durch Spaltdichtungen dieser Art oder auch durch ähnliche, berührende Dichtungen ist sichergestellt, daß das Fett im Verzahnungsbereich verbleibt.

Bei den dargestellten Ausführungsbeispielen ist der Gesamtüberdeckungsgrad $\epsilon_{ges}$ der Verzahnung im wesentlichen durch die Sprungüberdeckung $\epsilon\beta$ bestimmt. Es gilt nach dem Verzahnungsgesetz

$$\epsilon_{ges} = \epsilon_\alpha + \epsilon\beta$$

Infolge der Minimierung des Tragbereichs 33 ist die Profilüberdeckung klein gegenüber der Sprungüberdeckung, die durch

$$\epsilon\beta = \frac{b \cdot \sin\beta}{\pi \cdot m_n}$$

gegeben ist. Dabei bedeuten b die Breite der Verzahnung, $\beta$ der Schrägungswinkel und $m_n$ der Nor-

malmodul. Gemäß dem Verzahnungsgesetz sind b, $\beta$ und $m_n$ so zu wählen, daß $\epsilon_{ges}$ größer als 1 sein muß, vorzugsweise jedoch etwa 2 beträgt.

Neben der bereits erwähnten Kühlung des Seitenraumdeckels 21 von außen mit Luft, Wasser oder Öl besteht die Möglichkeit, die Zahnräder 16, 17 unmittelbar mit einem Gasstrom zu kühlen. Beim Ausführungsbeispiel nach Fig. 8 wird dazu über den Kühler 45 geführtes Gas, vorzugsweise Luft, durch eine radiale Öffnung 46 in den Seitenraum 15 eingeführt und auf der gegenüberliegenden Seite (Öffnung 47) wieder abgeführt. Da die Verzahnung 18, 19 die Wirkung einer Zahnradpumpe hat, ist eine ausreichende Durchströmung des Seitenraumes 15 sichergestellt.

Fig. 9 zeigt ein Ausführungsbeispiel mit einer internen Gasumspülung. Das Kühlgas wird dem Auslaß 48 der dargestellten Wälzkolbenvakuumpumpe 1 über die Leitung 49 entnommen und - wie zu Fig. 8 beschrieben - durch den Seitenraum 15 hindurchgeführt. Die aus der Öffnung 47 im Seitenraumdeckel 21 austretende Luft wird über die Leitung 50 dem Einlaß 51 der Wälzkolbenpumpe 1 wieder zugeführt.

Die Figur 9 zeigt eine Ausführung der Gasspülung, die mit der an sich bekannten Umwegleitung bei Wälzkolbenpumpen kombiniert ist. Das Umwegleitungsventil ist mit 54 bezeichnet. Es öffnet automatisch, wenn die Druckdifferenz zwischen Auslaßdruck und Einlaßdruck einen bestimmten zulässigen Wert überschreitet, also in Fällen besonders hoher Belastung und damit Wärmeerzeugung. Beim dargestellten Ausführungsbeispiel tritt dann auch eine verstärkte Kühlung des Getriebes 16, 17 ein. Damit auch bei geschlossenem Umwegleitungsventil 54 eine Kühlung des Getriebes gewährleistet ist, ist dem Ventil 54 ein ständig offener Bypass 55 zugeordnet, durch den die Aufrechterhaltung des notwendigen Minimalgasstromes sichergestellt ist.

Fig. 8 zeigt noch eine weitere oder zusätzliche Möglichkeit, den Eingriffsstoß zu mildern. Sie besteht darin, relativ elastische Zahnradseitenbereiche (zumindest auf der Seite des Tragbereichsanfanges) vorzusehen. Um eine solche Eigenschaft zu erzeugen, kann zum Beispiel die Breite eines Zahnrades 16 und/oder 17 - bis auf einen umlaufenden Rand 52 beziehungsweise 53 mit der Verzahnung 18 beziehungsweise 19 - zurückgenommen sein. Ein weiterer Vorteil dieser Maßnahme besteht darin, daß die Verzahnung unempfindlicher gegen Verzahnungs-oder Schrägwinkelabweichungen ist.

## Ansprüche

1. Zweiwellenvakuumpumpe mit berührungsfrei im Schöpfraum (8) rotierenden Kolben (3, 4) mit einem in einem Seitenraum (15) befindlichen Synchronisationsgetriebe mit zwei Zahnrädern (16, 17),
dadurch gekennzeichnet, daß das Zahnprofil der Zahnräder (16, 17) derart ausgebidet ist, daß der Kontakt der Zahnflanken (26) auf die unmittelbare Nähe des Wälzkreises (29) beschränkt ist.

2. Vakuumpumpe nach Anspruch 1, dadurch gekennzeichnet, daß die Verzahnung als Schrägverzahnung ausgebildet ist und daß der Schrägungswinkel $\beta$ 10° bis 35°, vorzugsweise etwa 20° beträgt.

3. Vakuumpumpe nach Anspruch 1 oder 2, dadurch gekennzeichnet, daß an mindestens einem der Zahnräder (16, 17) der Kopfbereich (25) und/oder der Fußbereich (28) der Zahnflanken (26) im Vergleich zur Standardform eines Zahnprofils so weit zurückgenommen ist, daß der Kontakt der Zahnflanken (26) auf unmittelbare Nähe des Wälzkreises (29) beschränkt ist.

4. Pumpe nach Anspruch 1, 2 oder 3, dadurch gekennzeichnet, daß die Verzahnung (18, 19) der Zahnräder (16, 17) im Vergleich zur Standardform eine reduzierte Zahnhöhe z hat.

5. Pumpe nach einem der Ansprüche 1 bis 4, dadurch gekennzeichnet, daß an zumindest einem der Zahnräder (16, 17) die wirksame Zahnhöhe oberhalb des Wälzkreises (29) ein Hundertstel bis zwei Fünftel des Moduls m beträgt.

6. Pumpe nach einem der vorhergehenden Ansprüche, dadurch gekennzeichnet, daß das Flankenprofil der Zähne (24) derart gestaltet ist, daß Gleitbewegungen während der Phase des Eingreifens der Zähne minimiert sind.

7. Pumpe nach einem der vorhergehenden Ansprüche, dadurch gekennzeichnet, daß das Flankenprofil vorzugsweise im Tragbereichseingang zurückgenommen ist.

8. Pumpe nach einem der vorhergehenden Ansprüche, dadurch gekennzeichnet, daß elastische Zahnradseitenbereiche (52, 53) vorgesehen sind.

9. Pumpe nach Anspruch 8, dadurch gekennzeichnet, daß die Breite der Zahnräder (16 und/oder 17) - bis auf einen umlaufenden Rand (52 bzw. 53) der Verzahnung (18 bzw. 19) - zurückgenommen ist.

10. Pumpe nach einem der vorhergehenden Ansprüche, dadurch gekennzeichnet, daß Mittel zur Kühlung der Zahnräder (16, 17) vorgesehen sind.

11. Pumpe nach einem der vorhergehenden Ansprüche, dadurch gekennzeichnet, daß ein der Form der Zahnräder angepaßter, etwa 8-förmiger Seitenraumdeckel (21) vorgesehen ist.

12. Pumpe nach Anspruch 11, dadurch gekennzeichnet, daß dem Deckel (21) eine Luft- Wasser-oder Öl-Kühlung zugeordnet ist.

13. Pumpe nach Anspruch 11 oder 12, dadurch gekennzeichnet, daß die Spalte (22, 23) im Seitenraum (15) teilweise mit einem Wälzlagerfett gefüllt sind.

14. Pumpe nach Anspruch 13, dadurch gekennzeichnet, daß zumindest eine Seite der Zahnräder (16, 17) derart konisch gestaltet ist, daß die Breite der Zahnräder in radialer Richtung abnimmt.

15. Pumpe nach Anspruch 13 oder 14, dadurch gekennzeichnet, daß die Kopffläche (36) der Zähne (24) derart geneigt ist, daß die vorlaufende Kopfkante eine größere Zahnhöhe hat als die nachlaufende Kopfkante.

16. Pumpe nach einem der Anpsrüche 13, 14 oder 15, dadurch gekennzeichnet, daß sich das Fett ausschließlich im Verzahnungsbereich befindet und daß Dichtungen(37, 38) zur Abgrenzung des Fett enthaltenden Raumes gegenüber dem restlichen Seitenraum (15) vorgesehen sind.

17. Pumpe nach Anspruch 16, dadurch gekennzeichnet, daß berührungsfreie Dichtungen (37, 38) mit in Radialnuten (43, 44) in den Zahnrädern (16 oder 17) hineinragenden Kanten vorgesehen sind.

18. Pumpe nach einem der vorhergehenden Ansprüche, dadurch gekennzeichnet, daß für die Zahnräder (16, 17) eine Gaskühlung vorgesehen ist.

19. Pumpe nach Anspruch 18, dadurch gekennzeichnet, daß der Seitenraumdeckel (21) mit einer Gaszuführungsöffnung (46) und einer Gasabführungsöffnung (47) ausgerüstet ist und daß an die Gaszuführungsöffnung (46) ein mit einem Kühler (45) versehenes Gasleitungssystem angeschlossen ist.

20. Pumpe nach Anspruch 19, dadurch gekennzeichnet, daß der Kühler (45) mit dem Auslaß (48) der Zweiwellenpumpe und die Auslaßöffnung (47) im Seitenraumdeckel (21) mit dem Einlaß (51 ) der Zweiwellenpumpe verbunden ist.

21. Pumpe nach Anspruch 20, dadurch gekennzeichnet, daß die Gaskühlung mit einer Umwegleitung kombiniert ist.

22. Pumpe nach Anspruch 21, dadurch gekennzeichnet, daß in dem Gasleitungssystem (49, 50) ein Umwegleitungsventil (54) angeordnet ist, das von einem einen ständigen Minimalgasstrom sicherstellenden Bypass (55) überbrückt ist.

23. Pumpe nach einem der vorhergehenden Ansprüche, gekennzeichnet durch ein trocken laufendes Getriebe (16, 17).

## FIG.2

## FIG.1

0 287 685

87.004 EU

0 287 685

FIG.3

FIG.4

FIG.5a

FIG.5

FIG.6

87.004 EU

FIG.7

FIG.8

FIG.9

87.004 EU

| | Europäisches Patentamt | **EUROPÄISCHER RECHERCHENBERICHT** | Nummer der Anmeldung<br>EP 87 10 3630 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - B - 1 225 459 (NIEMANN)<br><br>* Spalte 1, Zeile 41 - Spalte 4, Zeile 4; Abbildungen 1-3; Spalte 4, Zeilen 21-29 * | 1-4,6, 7,23 | F 04 C 18/12 |
| A | -- | 5 | |
| Y | US - A - 3 121 530 (LORENZ)<br><br>* Spalte 3, Zeilen 5-20; Abbilung 3 * | 1-4,6, 7,23 | |
| Y | -- <br> US - A - 3 438 279 (ROUVEROL)<br><br>* Spalte 3, Zeilen 27-74; Abbildungen 1-4 * | 1,2 | |
| A | -- <br> CH - A - 244 095 (ETA)<br><br>* Anspruch * | 3 | |
| A | -- <br> CH - A - 304 481 (BBC)<br><br>* Seite 1, Zeilen 20-28; Seite 3, Zeilen 39-57; Abbildungen 1,2,5 * | 8,9 | **RECHERCHIERTE SACHGEBIETE (Int. Cl.4)** |
| A | -- <br> US - A - 2 737 057 (FAFNIR BEARING)<br><br>* Spalte 2, Zeilen 55-66 * | 8 | F 04 C<br>F 01 C<br>F 16 H |
| A | -- <br> US - A - 1 852 789 (PETERSON)<br><br>* Seite 1, Zeile 81 - Seite 2, Zeile 2; Abbildungen 1-3 * | 8,9 | |

| Recherchenort | Abschlußdatum der Recherche | Prüfer |
|---|---|---|
| DEN HAAG | 04-11-1987 | WALVOORT |

Europäisches
Patentamt

---

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

## ☒ MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentansprüche 1-9,23: Verzahnungsgestaltung bezüglich des Eingreifens der Zahnräder

2. Patentansprüche 10-12,18-22: Kühlung

3. Patentansprüche 13-17: Schmierung

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, · für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-9,23